Europäisches Patentamt

European Patent Office

Office européen des brevets

(19)

(11) Veröffentlichungsnummer: **0 253 183 B1**

# EUROPÄISCHE PATENTSCHRIFT

(45) Veröffentlichungstag der Patentschrift: **10.04.91**

(51) Int. Cl.⁵: **C01G 23/02**

(21) Anmeldenummer: **87109275.5**

(22) Anmeldetag: **27.06.87**

(54) Verfahren zur Herstellung von TiCl4.

(30) Priorität: **11.07.86 DE 3623322**

(43) Veröffentlichungstag der Anmeldung:
**20.01.88 Patentblatt 88/03**

(45) Bekanntmachung des Hinweises auf die
Patenterteilung:
**10.04.91 Patentblatt 91/15**

(84) Benannte Vertragsstaaten:
**BE DE GB**

(56) Entgegenhaltungen:
**DE-A- 1 923 479**
**DE-B- 2 325 924**
**GB-A- 905 370**
**US-A- 2 836 547**

(73) Patentinhaber: **BAYER AG**

**W-5090 Leverkusen 1 Bayerwerk(DE)**

(72) Erfinder: **Lailach, Günter, Dr.**
**Bodelschwinghstrasse 23**
**W-4150 Krefeld(DE)**
Erfinder: **Deissmann, Walter, Dr.**
**Helmut-Macke-Strasse 8**
**W-4150 Krefeld(DE)**
Erfinder: **Schultz, Karl-Heinz, Dr.**
**Deswatinesstrasse 61**
**W-4150 Krefeld(DE)**

## Beschreibung

Die Erfindung betrifft ein Verfahren zur Herstellung von TiCl$_4$ durch Chlorierung von titanhaltigen Rohstoffen in Gegenwart von Reduktionsmitteln, Abtrennen von festen Metallchloriden durch Kühlen der Reaktionsgase, anschließende Kondensation des Roh-TiCl$_4$, Reduktion von im Roh-TiCl$_4$ anwesenden Vanadinverbindungen unter Bildung von festen Reaktionsprodukten und nachfolgender Destillation.

Titandioxidpigmente werden heute neben dem Sulfatverfahren auch nach dem Verbrennungsverfahren hergestellt. Dabei werden TiCl$_4$ und Sauerstoff bei erhöhter Temperatur direkt zu Titandioxidpigmenten umgesetzt.

Das hierfür benötigte TiCl$_4$ wird durch Chlorieren von titanhaltigen Materialien wie Ilmenit, Leucoxen oder Rutil in Gegenwart von Kohlenstoff erhalten. Das dabei entstehende sogenannte Roh-TiCl$_4$ ist durch eine Vielzahl anderer Chloride und Chlor verunreinigt. Vorweigend liegen im TiCl$_4$ noch die Chloride des Eisens, Aluminiums und Siliciums, sowie die Chloride und Oxychloride des Vanadins vor.

Um TiO$_2$-Pigmente mit einem reinen weißen Farbton zu erhalten, ist die Entfernung dieser Verunreinigungen unbedingt erforderlich.

Die meisten Verunreinigungen, wie die Chloride des Eisens, Aluminiums, Siliciums lassen sich durch Destillation abtrennen. Bei der Destillation des Roh-TiCl$_4$ entstehen eingedickte Suspensionen der festen Metallchloride sowie der äußerst feinteiligen Reste der Chlorierungsrohstoffe, die sich nur schwierig zur Trockne eindampfen lassen, besonders wenn sie einen großen Anteil AlCl$_3$ enthalten. Dies führt zu erhöhtem Energiebedarf und/oder Ausbeuteverlusten an TiCl$_4$.

Vorteilhafter wäre deshalb die Abtrennung der festen Metallchloride und der feinteiligen Reste der Chlorierungsrohstoffe durch Filtration und die Trocknung des Filterkuchens. Dieser Weg wird aber durch die schlechte Filtrierbarkeit der feinteiligen Feststoffe sehr aufwendig.

Nach der Abtrennung der festen Verunreinigungen erhält man ein Produkt, das noch Vanadin als VOCl$_3$ oder VCl$_4$ enthält.

Eine destillative Entfernung von VOCl$_3$ und VCl$_4$ aus dem Titantetrachlorid ist wegen der ähnlichen Siedepunkte sehr aufwendig.

Deshalb werden diese Verbindungen durch Reduktion in feste niederwertige Vanadinchloride überführt.

Durch anschließende Destillation kann man zu einem Produkt mit nur noch geringen Vanadinkonzentrationen kommen (sogenanntes Rein-TiCl$_4$).

So sind beispielsweise Reinigungsmethoden mit H$_2$S (DE-A 1 923 479), mit tierischen und pflanzlichen Ölen, Fetten, Wachsen, Harzen und Seifen, mit flüssigen oder dampf- oder gasförmigen Kohlenwasserstoffen, Ölen, Fetten, Alkoholen, Ketonen, organischen Säuren, Aminen (CH-A 365 393, CH-A 262 267, DE-C 867 544, FR-A 1 466 478, FR-A 1 460 362), mit Metallen und Metallsalzen (BE-A 539 078, DE-A 1 922 420, DE-B 1 271 693, US-A 3 915 364, US-A 2 871 094, US-A 2 753 255, US-A 2 560 424, US-A 2 555 361, US-A 2 530 735 und US-A 2 178 685) bekannt.

Besonders vorteilhaft kann Titantetrachlorid mit speziellen cyclischen aliphatischen oder aromatischen Verbindungen (DE-C 23 29 045) und mit speziellen Aminen (DE-C 23 25 924) gereinigt werden.

Die Aufgabe der Erfindung bestand darin, ein besonders vorteilhaftes Verfahren zur Reinigung von TiCl$_4$ zu finden, das die beschriebenen Nachteile nicht aufweist.

Überraschenderweise wurde gefunden, daß die Abtrennung der Feststoffe im Roh-TiCl$_4$ durch Filtration wesentlich erleichtert werden kann, wenn die bei der Reduktion der Vanadinverbindungen entstehenden festen Reaktionsprodukte als Filterhilfsmittel bei der Filtration des Roh-TiCl$_4$ eingesetzt werden.

Die festen Reaktionsprodukte bestehen hauptsächlich aus den festen niedrigwertigen Vanadinverbindungen, oxidiertem Reduktionsmittel und gegebenenfalls Resten von nicht umgesetztem Reduktionsmittel.

Die Erfindung betrifft somit ein Verfahren zur Herstellung von TiCl$_4$ durch Chlorierung titanhaltiger Rohstoffe in Gegenwart von Reduktionsmitteln, Abrennung von festen Metallchloriden durch Kühlen der Reaktionsgase, anschließende Kondensation des Roh-TiCl$_4$, Reduktion von im Roh-TiCl$_4$ anwesenden Vanadinverbindungen unter Bildung von festen Reaktionsprodukten und nachfolgender Destillation, welches dadurch gekennzeichnet ist, daß die Reaktionsprodukte als Filterhilfsmittel bei der Filtration des Roh-TiCl$_4$ eingesetzt werden.

Eine Ausführungsform des erfindungsgemäßen Verfahrens besteht darin, daß die Reaktionsprodukte eingesetzt werden, die vor der Destillation bei einer Filtration abgetrennt werden.

In einer anderen Ausführungsform des Verfahrens werden die Reaktionsprodukte eingesetzt, die während oder nach der Destillation als Sumpf anfallen.

Eine weitere Ausführungsform des Verfahrens sieht vor, daß die Reaktionsprodukte eingesetzt werden, die bei einer Filtration des Sumpfes der Destillation abgetrennt werden.

Bei der Filtration des Roh-TiCl$_4$ werden die Reaktionsprodukte dem Roh-TiCl$_4$ zugemischt und/oder als Precoatschicht eingesetzt.

Die Reduktion der Vanadinverbindungen erfolgt bevorzugt mit organischen Kohlenwasserstoffen oder organischen Aminen.

Eine besonders bevorzugte Ausführungsform des Verfahrens besteht darin, daß als organisches Amin Diphenylamin eingesetzt wird und daß 2,5 bis 5 kg Diphenylamin pro kg Vanadin verwendet werden.

Die Reduktion der Vanadinverbindungen mit organischen Kohlenwasserstoffen oder organischen Aminen erfolgt bevorzugt bei 80 bis 125° C.

In einer weiteren bevorzugten Ausführungsform des Verfahrens wird das chlor- und feststoffhaltige Roh-TiCl$_4$ vor der Filtration entchlort, da die Gegenwart von elementarem Chlor zu einem Mehrverbrauch der Reduktionskomponente führt.

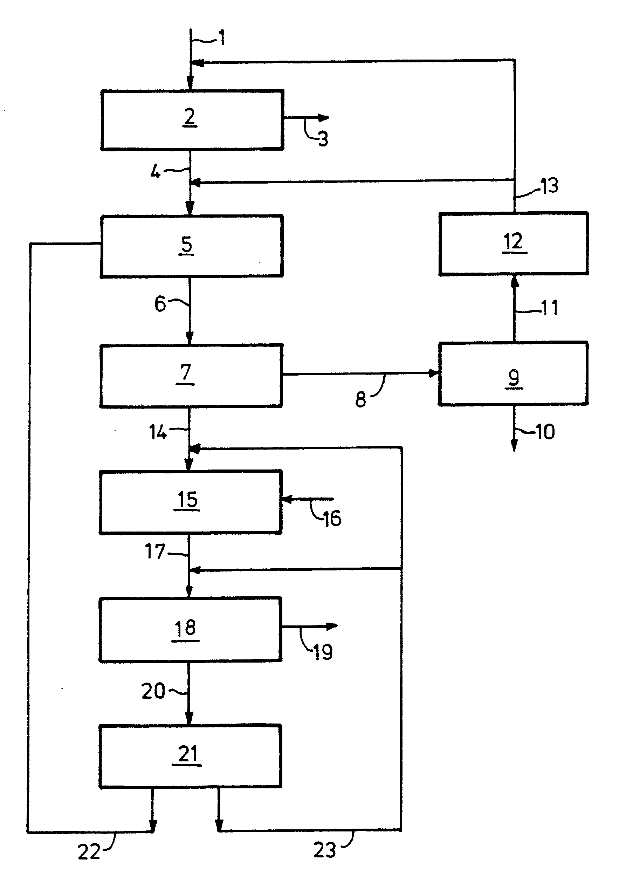

Das erfindungsgemäße Verfahren soll anhand der Fig. 1 bis 3 genauer erläutert werden.

Entsprechend Fig. 1 wird ohlor- und feststoffhaltiges Roh-TiCl$_4$ (1) zuerst entchlort, um einen Mehrverbrauch der Reduktionskomponente zu vermeiden.

Die Chlor-Entfernung (2) kann in einer Entchlorungskolonne oder durch Aufheizen in einem Rührgefäß auf 100 bis 130° C erfolgen, wobei das aus dem TiCl$_4$ entweichende Chlor (3) mit Stickstoff aus dem Gefäß verdrängt wird.

Das entchlorte Roh-TiCl$_4$ (4) wird mit dem Filterkuchen II (22), bestehend aus den festen Reaktionsprodukten der Reduktion der Vanadinverbindungen und anhaftendem TiCl$_4$, gemischt (5). Die dabei erhaltene Mischung (6) wird filtriert, vorzugsweise bei 50 bis 100° C (7), wobei die festen Anteile des Filterkuchens II (22) als Filterhilsmittel eine Auflockerung des Filterkuchens I (8) bewirken und so zu einer wesentlich höheren Filterleistung führen.

Das Filtrat I (14) enthält im wesentlichen noch VOCl$_3$, VCl$_4$ und SiCl$_4$ als Verunreinigungen. Die Vanadinverbindungen werden durch Versetzen des Filtrats I (14) mit dem Reduktionsmittel (16) reduziert (15). Vorzugsweise werden die Vanadinverbindungen entsprechend DE-C 2 325 924 oder DE-C 2 329 045 im auf 80 bis 125° C erhitztem Filtrat I (14) reduziert. Aus der gebildeten Suspension (17) wird das TiCl$_4$ (zusammen mit dem SiCl$_4$) als Rein-TiCl$_4$ (19) durch Destillation (18) abgetrennt. Die Destillation wird vorzugsweise aus einem beheizten Rührbehälter, einem Horizontalverdampfer oder einem Zwangsumlaufverdamfer durchgeführt. Gegebenenfalls kann in einer nachgeschalteten Kolonne das SiCl$_4$ vom TiCl$_4$ getrennt werden.

Der bei der Destillation (18) anfallende Sumpf (10) wird filtriert (21), vorzugsweise bei 70 bis 100° C. Das aus dieser Filtration II (21) anfallende Filtrat II (23) wird nach der Reduktion der Vanadinverbindung (15) oder vorzugsweise vor der Reduktion der Vanadinverbindung (15) zum Filtrat I (14) zugegeben.

Der Filterkuchen II (22) wird, wir oben beschrieben, in den Mischer (5) abgeworfen und dient bei der Filtration I (7) als Filterhilfsmittel.

Alternativ dazu kann der Filterkuchen II (22) als Precoat-Schicht bei der Filtration I (27) eingesetzt werden, wobei nach der Filtration II (21) das Filter nicht abgereinigt sondern mit dem entchlorten Roh-TiCl$_4$ (4) beaufschlagt wird.

Es ist auch möglich, daß ein Teil des Filterkuchens II (22) als Filterhilfsmittel dem Roh-TiCl$_4$ (4) zugesetzt wird und der andere Teil als Precoat-Schicht benutzt wird.

Der bei der Filtration I (7) anfallende Filterkuchen I (8) enthält alle bei der Roh-TiCl$_4$-Reinigung anfallenden Feststoffe. Die Trocknung (9) des Filterkuchens (8) kann entweder in Heizflächentrocknern mit indirekter Beheizung bei Unterdruck, Umgebungsdruck oder geringem Überdruck oder direkt auf dem Filter mit 100 bis 120° C heißen Inertgas, vorzugsweise Stickstoff erfolgen. Der dabei anfallende TiCl$_4$-Dampf (11) wird kondensiert (12) und das Kondensat (13) dem Roh-TiCl$_4$ (1, 4) vor oder vorzugsweise nach der Entchlorung (2) zugeführt. Nach dieser ersten Trocknung kann der Filterkuchen vor dem Austragen aus dem Filter mit einem Inertgas, vorzugsweise Stickstoff, bevorzugt mit einer Temperatur von 50 bis 110° C, weiter trockengeblasen werden. Das entstehende Inertgas-TiCl$_4$-Dampf-Gemisch kann entweder direkt oder nach Kondensation der Hauptmenge des TiCl$_4$ zum Abtreiben des Chlors bei der Roh-TiCl$_4$-Entchlorung (2) verwendet werden. Die getrockneten Feststoffe (10) werden aus dem Prozeß entfernt.

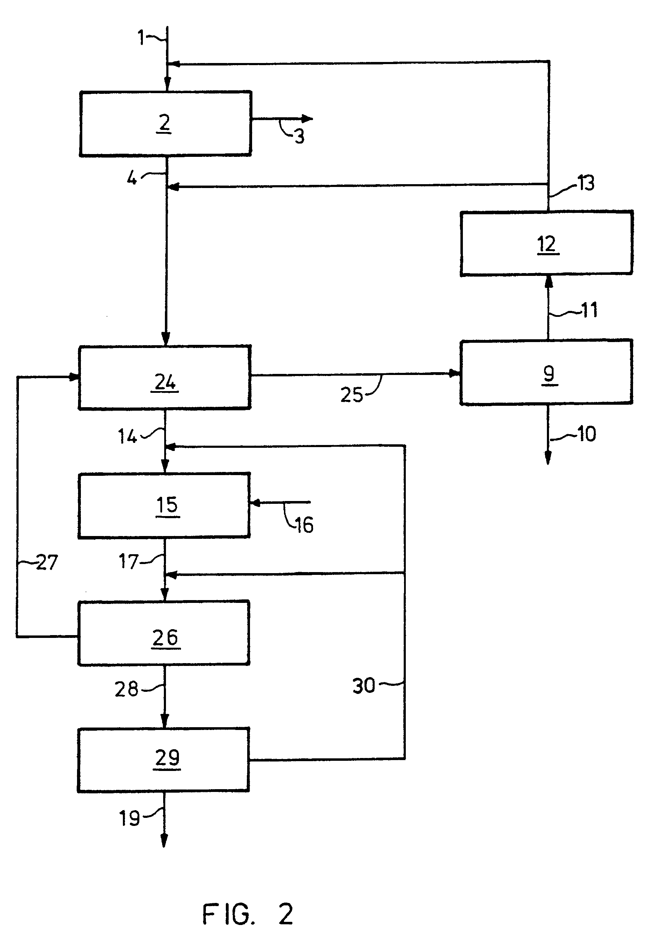

Fig. 2 zeigt eine Variante des erfindungsgemäßen Verfahrens, bei der der Filterkuchen II (27) als Precoat-Schicht bei der Filtration I (24) dient. Nach der Filtration II (26) wird demzufolge das Filter nicht abgereinigt, sondern mit dem entchlorten Roh-TiCl$_4$ (4) beaufschlagt.

Man erhält dabei einen aus zwei Schichten bestehenden Filterkuchen (25), der ebenfalls alle bei der TiCl$_4$-Reinigung anfallenden Feststoffe enthält und analog Fig. 1 getrocknet wird.

Das Filtrat I (14) wird analog Fig. 1 der Reduktion der Vanadinverbindungen (15) unterworfen. Abweichend von Fig. 1 erfolgt die Filtration II (26) aber unmittelbar nach der Reduktion der Vanadinverbindungen (15). Die TiCl$_4$-Destillation (29) erfolgt aus dem feststofffreien Filtrat (II) (28). Hierfür eignen sich besonders Umlaufverdampfer oder Horizontalverdampfer, gegebenenfalls mit nachgeschalteter Kolonne zur SiCl$_4$-Abtrennung aus dem Rein-TiCl$_4$ (19). Der Sumpf (30) aus der Destillation (29) wird der Suspension (17) zugeführt.

Der bei der Filtration II (26) entstehende Filterkuchen II (27) kann wahlweise auch analog Fig. 1 mit dem entchlorten Roh-TiCL$_4$ (4) vermischt wer-

den, wobei die festen Anteile des Filterkuchens II (27) als Filterhilfsmittel eine verbesserte Filterleistung der Filtration I (24) bewirken.

Möglich ist auch, daß ein Teil des Filterkuchens II (27) dem Roh-TiCL$_4$ zugemischt wird und der andere Teil als Precoat-Schicht benutzt wird.

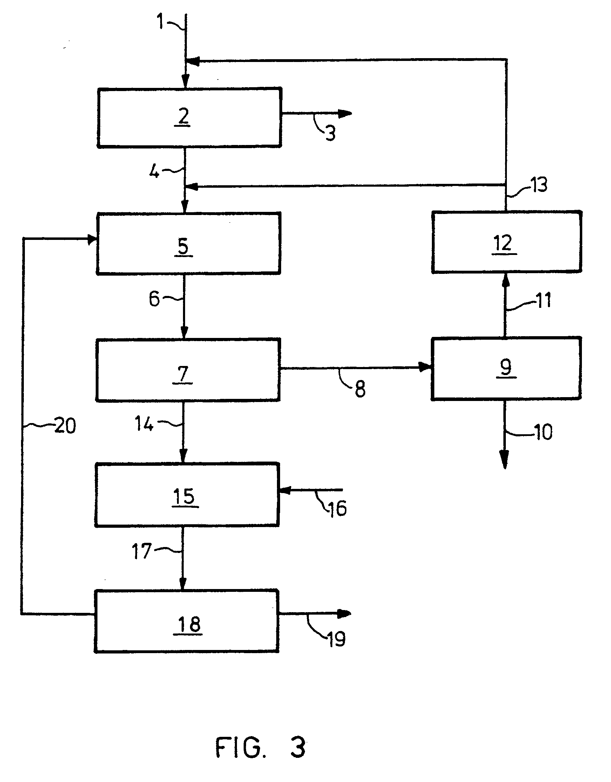

Fig. 3 zeigt eine Variante des erfindungsgemäßen Verfahrens analog Fig. 1, bei der der Sumpf aus der TiCl$_4$-Destillation (18) nicht filtriert, sondern direkt mit dem entchlorten Roh-TiCl$_4$ (4) vermischt wird (5). Üblicherweise werden 5 bis 25 % des in die TiCl$_4$-Destillation (18) eingespeisten Volumens als Sumpf (20) abgezogen und mit dem entchlorten Roh-TiCl$_4$ (4) vermischt. Der Nachteil, daß eine größere TiCl$_4$-Menge zu filtrieren ist, wird normalerweise durch den Vorteil kompensiert, daß nur eine Filtration im Gesamtprozeß erforderlich ist.

Als Filter werden Druckfilter vorzugsweise vom Typ der Blattfilter oder Kerzenfilter benutzt, aus denen der Filterkuchen diskontinuierlich ausgetragen wird.

Das erfindungsgemäße Verfahren bietet besonders bei der Verarbeitung titanärmerer Rohstoffe, wie Titanschlacke, synthetischem Rutil, Leucoxen, Ilmenit oder brasilianischem Anatas große Vorteile, weil dei Abtrennung der größeren Gehalte an festen Chloriden aus dem Roh-TiCl$_4$ durch Destillation des TiCl$_4$ besonders schwierig ist und eine direkte Filtration des Roh-TiCl$_4$ in diesem Fall nur mit sehr geringer Filterleistung möglich ist.

Die Vorteile des erfindungsgemäßen Verfahrens sollen anhand der Beispiele verdeutlicht werden.

Beispiel 1 (entsprechend Fig. 1)

Bei der Chlorierung von Rutilsand anfallendes Roh-TiCl$_4$ enthielt 1,5 Gew.-% Feststoffe, 1050 ppm Vanadin als VOCl$_3$ oder VCl$_4$ und 580 ppm Chlor. Das Roh-TiCl$_4$ (1) wurde in einem Rührbehälter (2) mit nachgeschaltetem TiCl$_4$-Kondensator auf 125°C erhitzt. In den Gasraum des Behälters wurde 20 min lang TiCl$_4$-haltiger Stickstoff eingeblasen, der beim Trockenblasen des Filterkuchens I (8) anfiel. Nach der TiCl$_4$-Kondensation resultierte ein Chlor-Stickstoff-Gemisch, das einer Abgaswäsche zugeführt wurde.

Nach dieser Behandlung enthielt das entchlorte Roh-TiCl$_4$ (4) weniger als 10 ppm Chlor. In den Rührbehälter wurde nun der aus den Reaktionsprodukten der Reduktion der Vanadium-Verbindungen bestehende Filterkuchen II (22) eingetragen und mit dem Roh-TiCl$_4$ (4) gemischt (5). Die Mischung (6) wurde auf 80°C gekühlt und mit einem Fundabac®-Kerzenfilter (Firma DrM, Schweiz) bei 5 bar (abs.) filtriert (7). Die Filterleistung betrug bei einer erreichten Kuchendicke von 25 mm durchschnittlich 2,8 m$^3$ Filtrat/h•m$^2$ Filterfläche. (Bei der vergleichsweisen Filtration von Roh-TiCl$_4$ (1) ohne Zumischen des Filterkuchens II (22) betrug die Filterleistung bei einer erreichten Kuchendicke von 18 mm nur 0,35 m$^3$/h•m$^2$).

Nach beendeter Filtration (7) wurde die Trübe entleert und der Filterkuchen 20 min lang mit 100°C heißem Stickstoff trockengeblasen. Der aus dem Filter austretende TiCl$_4$-haltige Stickstoff wurde bei der Entchlorung (2) der nächsten Roh-TiCl$_4$-Charge verwendet. Aus dem krümeligen Filterkuchen I (8) wurde in einem indirekt beheizten Schaufeltrockner (9) das restliche TiCl$_4$ verdampft (11) und nach der Kondensation (12) in das Roh-TiCl$_4$ (1) eingespeist. Die trockenen Feststoffe (10) wurden einer Rückstandsbehandlung zugeführt.

Das bei der Filtration I (7) anfallende Filtrat (14) wurde in einem Zwischenbehälter gesammelt und chargenweise in einem Rührbehälter (15) auf 115°C erhitzt und mit 4 kg Diphenylamin pro m$^3$ (16) versetzt. Nach 5 min wurde die gebildete Suspension (17) in einen Behälter abgelassen, aus dem sie kontinuierlich in einen Rührbehälter mit Heizmantel (18) eingespeist wurde, aus dem das Rein-TiCl$_4$ (19) abgedampft und anschließend kondensiert wurde. Ein Teil der im Verdampfer (18) eingedickten Suspension wurde als Sumpf (20) überlaufen gelassen und nach Kühlung auf ca. 80°C mit einem Fundabac®-Kerzenfilter (21) filtriert. Das Filtrat (23) wurde der Suspension (17) vor der TiCl$_4$-Verdampfung (18) zugesetzt. Der Filterkuchen (22) wurde, wie oben beschrieben, in dem entchlorten Roh-TiCl$_4$ (4) suspendiert, wo er als Filterhilfsmittel bei der Filtration I (7) diente. Die Filterleistung in Filtration II (21) betrug bei einer erreichten Kuchendicke von ca. 25 mm und 4 bar (abs.) Druck ca. 3,2 m$^3$ Filtrat/h•m$^2$ Filterfläche.

Das Rein-TiCl$_4$ (19) war farblos. Es enthielt weniger als 2 ppm Vanadin und 28 ppm SiCl$_4$.

Beispiel 2 (entsprechend Fig. 2)

Bei der Chlorierung von brasilianischem Anatas fiel Roh-TiCl$_4$ (1) mit 2,9 Gew.-% Feststoffen, 640 ppm V und 590 ppm Chlor an. Das Roh-TiCl$_4$ wurde analog Beispiel 1 entchlort (2). Das entchlorte Roh-TiCl$_4$ (4) wurde auf ca. 70°C abgekühlt und mit einem Fundabac®-Kerzenfilter bei 5 bar (abs.) filtriert (24), dessen Filterkerzen bereits mit einer ca. 10 mm dicken Schicht des Filterkuchens II (27) als Precoat Schicht belegt waren. Bei einer erreichten Gesamtdicke des Filterkuchens von ca. 15 mm betrug die Filtrationsleistung in der Filtration I (24) 0,8 m$^3$/h•m$^2$ Filterfläche. (Zum Vergleich: Bei der direkten Filtration des Roh-TiCl$_4$ (1) wurden bei maximal 0,6 mm Kuchendicke durchschnittlich 0,3 m$^3$/h•m$^2$ Filterleistung erreicht. Bei Zumischen des Filterkuchens II (27) zum entchlorten Roh-TiCl₄ (4) analog Fig. 1 wurden bei maximal ca. 15 mm Kuchendicke durchschnittlich 0,95 m³/h•m² erreicht).

Der Filterkuchen (25) wurde analog Beispiel 1 getrocknet.

Das Filtrat (14) wurde chargenweise auf 125°C erhitzt und mit 2,7 kg Diphenylamin pro m³ (16) versetzt (15). Nach Abkühlen auf ca. 75°C wurde die Suspension (17) mit einem Fundabac®-Kerzenfilter bei 3,5 bar (abs.) filtriert (26). Bis zum Erreichen der maximalen Kuchendicke von ca. 10 mm betrug die durchschnittliche Filterleistung 6 m³/h•m². Nach Entleerung der Trübe wurde das Filter direkt wie oben beschrieben mit dem entchlorten Roh-TiCl₄ (4) beaufschlagt (24).

Aus dem Filtrat (28) aus der Filtration II (26) wurde in einem Horizontalverdampfer mit nachgeschalteten Kondensator (29) das Rein-TiCl₄ (19) abdestilliert. An dem der Filtrateinspeisung abgewandten Ende des Horizontalverdampfers wurden 5 bis 10 % der eingespeisten Menge als Sumpf (30) abgezogen und in die Suspension (17) zurückgeführt. Das Rein-TiCl₄ war farblos und enthielt weniger als 2 ppm Vanadin.

Beispiel 3 (entsprechend Fig. 3)

Entchlortes Roh-TiCl₄ (4) (entsprechend Beispiel 2) wurde in einem Rührbehälter (5) mit dem Sumpf (20) aus der TiCl₄-Destillation (18) gemischt. Die Filtration (7) und Filterkuchenbehandlung erfolgten analog Beispiel 1. Die Filterleistung betrug 1,1 m³/h•m² Filterfläche bei einer maximalen Kuchendicke von 15 mm. Das Filtrat (14) wurde chargenweise auf 125°C erhitzt und mit 2,4 kg Diphenylamin pro m³ (16) versetzt (15). Anschließend wurde das Rein-TiCl₄ (19) in einem Rührbehälter (18) aus der die Reaktionsprodukte enthaltenden Suspension (17) abdestilliert. Als feststoffhaltiger Sumpf (20) wurden ca. 10 % des eingespeisten Volumens (17) aus dem Verdampfer (18) abgezogen und mit dem entchlorten Roh-TiCl₄ vermischt (5).

Das Rein-TiCl₄ war farblos und enthielt weniger als 2 ppm Vanadin.

Ansprüche

1. Verfahren zur Herstellung von TiCl₄ durch Chlorierung titanhaltiger Rohstoffe in Gegenwart von Reduktionsmitteln, Abtrennung von festen Metallchloriden durch Kühlen der Reaktionsgase, anschließende Kondensation des Roh-TiCl₄, Reduktion von im Roh-TiCl₄ anwesenden Vanadinverbindungen unter Bildung von festen Reaktionsprodukten und nachfolgender Destillation, dadurch gekennzeichnet, daß die festen Reaktionsprodukte als Filterhilfsmittel bei einer Filtration des Roh-TiCl₄ eingesetzt werden.

2. Verfahren nach Anspruch 1, dadurch gekennzeichnet, daß die Reaktionsprodukte eingesetzt werden, die vor der Destillation bei einer Filtration abgetrennt werden.

3. Verfahren nach Anspruch 1, dadurch gekennzeichnet, daß die Reaktionsprodukte eingesetzt werden, die während oder nach der Destillation als Sumpf anfallen.

4. Verfahren nach Anspruch 1, dadurch gekennzeichnet, daß die Reaktionsprodukte eingesetzt werden, die bei einer Filtration des Sumpfes der Destillation abgetrennt werden.

5. Verfahren nach einem der Ansprüche 1 bis 4, dadurch gekennzeichnet, daß die Reaktionsprodukte dem Roh-TiCl₄ zugemischt werden und/oder als Precoat-Schicht eingesetzt werden.

6. Verfahren nach einem der Ansprüche 1 bis 5, dadurch gekennzeichnet, daß die Reduktion der Vanadinverbindungen mit organischen Kohlenwasserstoffen oder organischen Aminen erfolgt.

7. Verfahren nach Anspruch 6, dadurch gekennzeichnet, daß als organisches Amin Diphenylamin eingesetzt wird.

8. Verfahren nach Anspruch 7, dadurch gekennzeichnet, daß 2,5 bis 5 kg Diphenylamin pro kg Vanadin eingesetzt werden.

9. Verfahren nach einem der Ansprüche 6 bis 8, dadurch gekennzeichnet, daß die Reduktion der Vanadinverbindungen bei 80 bis 125°C erfolgt.

10. Verfahren nach einem der Ansprüche 1 bis 9, dadurch gekennzeichnet, daß das Roh-TiCl₄ vor der Filtration entchlort wird.

Claims

1. Process for the production of TiCl₄ by chlorination of titanium-containing raw materials in presence of reducing agents, separation of solid metal chlorides by cooling the reaction gases, subsequent condensation of the crude TiCl$_4$, reduction of the vanadium compounds present in the crude TiCl$_4$ with formation of solid reaction products and subsequent distillation, characterized in that the solid reaction products are used as filter aid in the filtration of the crude TiCl$_4$.

2. Process according to claim 1, characterized in that the reaction products which are separated by a filtration before the distillation are used.

3. Process according to claim 1, characterized in that the reaction products which arise during or after the distillation as bottoms product are used.

4. Process according to claim 1, characterized in that the reaction products which are separated by a filtration of the bottoms product of the distillation are used.

5. Process according to one of claims 1 to 4, characterized in that the reaction products are admixed with the crude TiCl$_4$ and/or used as precoat layer.

6. Process according to one of claims 1 to 5, characterized in that the reduction of the vanadium compounds is carried out with organic hydrocarbons or organic amines.

7. Process according to claim 6, characterized in that diphenylamine is used as organic amine.

8. Process according to claim 7, characterized in that 2.5 to 5 kg diphenylamine are used per kg vanadium.

9. Process according to one of claims 6 to 8, characterized in that the reduction of the vanadium compounds is carried out at 80 to 125 °C.

10. Process according to one of claims 1 to 9, characterized in that the crude TiCl$_4$ is dechlorinated before the filtration.

**Revendications**

1. Procédé pour la fabrication de TiCl$_4$ par chloration de matières premières contenant du titane en présence de réducteurs, séparation des chlorures métalliques solides par refroidissement des gaz de réaction, condensation subséquente du TiCl$_4$ brut, réduction des composés de vanadium présents dans le TiCl$_4$ brut avec formation de produits réactionnels solides et distillation subséquente, caractérisé en ce que les produits réactionnels solides sont utilisés comme adjuvants de filtrage dans une filtration du TiCl$_4$ brut.

2. Procédé selon la revendication 1, caractérisé en ce qu'on utilise les produits réactionnels qui sont séparés par une filtration, avant la distillation.

3. Procédé selon la revendication 1, caractérisé en ce qu'on utilise les produits réactionnels qui se présentent comme résidu durant ou après la distillation.

4. Procédé selon la revendication 1, caractérisé en ce qu'on utilise les produits réactionnels qui sont séparés par une filtration du résidu de la distillation.

5. Procédé selon l'une des revendications 1 à 4, caractérisé en ce que les produits réactionnels sont mélangés au TiCl$_4$ brut et/ou utilisés comme couche de filtre.

6. Procédé selon l'une des revendications 1 à 5, caractérisé en ce que la réduction des composés de vanadium est effectuée avec des hydrocarbures organiques ou des amines organiques.

7. Procédé selon la revendication 6, caractérisé en ce que l'on utilise la diphénylamine comme amine organique.

8. Procédé selon la revendication 7, caractérisé en ce qu'on utilise 2,5 à 5 kg de diphénylamine par kg de vanadium.

9. Procédé selon l'une des revendications 6 à 8, caractérisé en ce que la réduction des composés de vanadium est effectuée à une température de 80 à 125 °C.

10. Procédé selon l'une des revendications 1 à 9, caractérisé en ce que le TiCl$_4$ brut est déchloré avant la filtration.

FIG. 1

FIG. 2

FIG. 3